(19) Europäisches Patentamt
European Patent Office
Office européen des brevets

(11) **EP 2 118 621 B1**

(12) **FASCICULE DE BREVET EUROPEEN**

(45) Date de publication et mention de la délivrance du brevet:
**13.04.2016 Bulletin 2016/15**

(51) Int Cl.:
**G01C 22/00** (2006.01)    **G01D 5/14** (2006.01)
**A43B 5/00** (2006.01)

(21) Numéro de dépôt: **08709099.9**

(22) Date de dépôt: **19.02.2008**

(86) Numéro de dépôt international:
**PCT/EP2008/052004**

(87) Numéro de publication internationale:
**WO 2008/101925 (28.08.2008 Gazette 2008/35)**

(54) **DISPOSITIF ET PROCEDE POUR DETECTER LA TRAJECTOIRE D'UN OBJET SE DEPLACANT EN DEUX DIMENSIONS**

EINRICHTUNG UND VERFAHREN ZUR BESTIMMUNG DES WEGS EINES SICH IN ZWEI DIMENSIONEN BEWEGENDEN OBJEKTS

DEVICE AND METHOD FOR DETERMINING THE PATH OF AN OBJECT MOVING IN TWO DIMENSIONS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.02.2007 FR 0753343**

(43) Date de publication de la demande:
**18.11.2009 Bulletin 2009/47**

(73) Titulaire: **Commissariat à l'Energie Atomique 75015 Paris (FR)**

(72) Inventeurs:
• **CATTIN, Viviane F-38120 Saint Egreve (FR)**
• **VIAL, Franck F-38850 Paladru (FR)**
• **MAILLOT, Marie-Cécile F-26000 Valence (FR)**

(74) Mandataire: **Ilgart, Jean-Christophe et al BREVALEX 95, rue d'Amsterdam 75378 Paris Cedex 8 (FR)**

(56) Documents cités:
**WO-A-01/88477        WO-A-2005/091113
DE-A1- 10 117 920      FR-A- 2 856 145
FR-A- 2 887 980**

Français

**Description**

**DOMAINE TECHNIQUE**

L'invention concerne le domaine des objets communicants et de la métrologie magnétique appliquée à la capture de mouvement sportif, médical ou industriel.
Elle concerne en particulier la mesure du mouvement périodique (ou pseudopériodique) de la marche d'une personne. Elle permet la mesure conjointe de l'orientation et de la cadence, ou périodicité, de ce mouvement.
Plus généralement l'invention s'applique au mouvement répétitif d'un marcheur ou d'un objet se déplaçant dans un plan ou une surface à deux dimensions ou le long d'un plan ou d'une surface à deux dimensions.
Aujourd'hui de nombreux objets deviennent « intelligents » via l'insertion d'éléments électroniques réalisant certaines fonctions de communication avec l'environnement. Dans le domaine du sport, par exemple, des chaussures équipées réalisent des fonctions très simples, comme par exemple l'allumage de LEDs, à intervalles réguliers ou lorsque le pied effectue une certaine action (marche, course ou saut).
Dans le domaine de la santé, la sédentarité caractéristique de nos styles de vie entraîne un intérêt croissant pour la marche à pied. De nombreuses personnes utilisent quotidiennement un podomètre pour évaluer leur exercice. Cet appareil estime la distance parcourue journellement ou dans un intervalle de temps donné, et en déduit le niveau d'activité physique de son porteur.
La plupart des systèmes utilisés dans les podomètres sont constitués d'accéléromètres. Ces capteurs fournissent un signal d'accélération périodique avec le mouvement de marche. Des traitements plus ou moins sophistiqués permettent de détecter et de compter les pas (et de remonter ainsi à la distance parcourue par calibration préalable de la longueur du pas) ou d'estimer la longueur du pas en temps réel.
Dans le document US 5 583 776 on exploite le signal d'un accéléromètre placé verticalement au niveau du pied, via des traitements de types seuillage et/ou analyse fréquentielle, pour estimer la distance parcourue. Ce dispositif, couplé avec un compas ou un GPS, forme un système de navigation basé sur la marche.
Une mesure d'accélération est une grandeur liée au champ de gravitation terrestre et à la vitesse du mouvement. D'autres traitements s'attachent donc à isoler, avec plus ou moins de succès, l'accélération propre au mouvement, puis intègrent le signal pour remonter à la distance (avec les risques de dérive qu'engendre la double intégration).
Si elle est très sensible à la vitesse du mouvement et à toutes les vibrations que subit le capteur pendant le mouvement, l'allure du signal accélérométrique ne dépend pas de la direction de la marche. Le système est donc intrinsèquement robuste vis-à-vis du cap suivi par le marcheur. En contrepartie, le cap n'est pas accessible via ce type de mesure.
Une mesure de magnétométrie correspond en revanche à la projection du champ magnétique terrestre sur l'axe sensible du capteur : elle est donc liée à la trajectoire que parcourt le capteur dans le champ magnétique ambiant. Pour un mouvement de marche ou de course, l'allure du signal périodique ne dépend plus de la vitesse du mouvement ou de la dureté du sol mais elle change en fonction de l'orientation du cap du capteur. Les magnétomètres sont, de ce fait, couramment employés pour estimer le cap, mais jamais pour estimer le nombre de pas ou la distance parcourue à partir du champ magnétique terrestre.
Certaines inventions, et notamment celle décrite dans US 6 132 391, utilisent des magnétomètres pour déterminer la direction de la marche, souvent accompagnés de système de positionnement global (type GPS).
D'autres travaux mentionnent l'utilisation d'une mesure magnétique pour remonter à la distance parcourue, mais ces systèmes font tous intervenir une source magnétique complémentaire, placée dans une première chaussure, et un capteur magnétique situé dans la deuxième chaussure pour limiter la variabilité du signal. Les traitements mis en oeuvre sont ensuite plus ou moins complexes (seuillages, calibration) pour estimer le nombre de pas, la longueur de la foulée et la distance parcourue, comme décrit par exemple dans WO 2005/034751.
Pour fournir à la fois le nombre de pas (ou la distance parcourue grâce, par exemple, à une calibration préalable de la longueur du pas), et le cap, les inventions précédentes nécessitent l'utilisation de deux types de mesures (accéléromètres et magnétomètres).
Pour résumer, on connaît donc des méthodes de mesure de distance à l'aide d'accéléromètres.
On connaît par ailleurs l'utilisation de systèmes magnétiques invasifs avec une source magnétique devant être implantée dans un objet, sur des objets en mouvement pour obtenir des caractéristiques du mouvement (distance, vitesse,...).
Les mesures obtenues avec ces techniques connues nécessitent les deux types de capteurs pour obtenir les deux types de mesures, distance et cap.

**EXPOSÉ DE L'INVENTION**

Un procédé selon l'invention permet de réaliser une reconstruction ou une projection, en deux dimensions, de la trajectoire d'un être vivant ou d'un objet se déplaçant, par un mouvement répétitif, dans un plan ou une surface à deux dimensions ou le long d'un plan ou d'une surface à deux dimensions.
Ce procédé comporte les étapes suivantes:

- mesurer au moins deux composantes de la projection du champ magnétique terrestre sur au moins deux axes d'un magnétomètre biaxe ou triaxe lié à, ou situé sur, l'être vivant ou l'objet; au moins une de ces composantes est variable, éventuellement les deux sont variables,

- détecter des occurrences du mouvement répétitif à partir de la mesure d'au moins une desdites composantes, variable, le long de l'un des axes dudit magnétomètre, ou mesurer la période, ou la fréquence, d'un signal correspondant à la mesure d'au moins une desdites composantes, variable, le long de l'un des axes dudit magnétomètre,
- mesurer le cap, ou la direction, du mouvement, à partir d'au moins deux mesures de champ le long d'au moins deux axes dudit magnétomètre,
- reconstituer ladite trajectoire à partir des occurrences détectées et des mesures de cap ou de direction ou à partir des mesures, d'une part de période ou de fréquence, d'autre part de cap ou de direction.

On désigne, ici et dans la suite, par l'expression « occurrence » du mouvement répétitif, une phase élémentaire du mouvement périodique ou pseudopériodique, phase dont la répétition constitue ce mouvement.

Pour mettre en oeuvre ce procédé, on utilise le signal fourni par un magnétomètre à au minimum deux axes. On équipe le marcheur ou l'animal ou l'objet mobile d'un capteur de champ magnétique, par exemple biaxe ou triaxe pour obtenir, à la fois, d'une part les informations de fréquence ou de période, ou relatives aux occurrences du mouvement, ou de distance, et d'autre part de cap.

L'invention ne met pas en oeuvre de podomètre, en particulier à base d'accéléromètre, ni d'accéléromètre.

Le document WO 2005/091113 décrit également un dispositif selon l'état de la technique.

La détection des occurrences du mouvement, au sens ci-dessus, ou de la période ou de la fréquence du mouvement, qui contient l'information sur la cadence du mouvement étudié, permet ensuite, éventuellement, de trouver la distance parcourue dans une ou des directions du plan ou de l'espace à deux dimensions.

L'invention résoud le problème de l'obtention de deux types de mesures, distance et cap, de façon simplifiée en utilisant deux (ou trois) capteurs ou axes magnétiques pour déterminer au moins les occurrences ou la cadence du mouvement (T), sans utiliser aucune information provenant de moyens tels qu'un accéléromètre ou un podomètre à base d'accéléromètre. A partir de la donnée de cadence on peut extraire le nombre de périodes.

Le fait d'exploiter directement le champ magnétique terrestre donne accès au cap du mouvement. Le même magnétomètre peut donc être aussi utilisé pour détecter le cap.

Un traitement adaptatif permet de s'affranchir de la variabilité du signal magnétique pour déterminer la cadence.

Une unité de traitement permet de traiter le signal délivré par le capteur. Le capteur et l'électronique associée peuvent bénéficier des avantages de réduction de taille associés aux techniques de microtechnologie. Ainsi un système selon l'invention peut être associé à un objet mobile pour le doter de deux fonctionnalités: mesure d'occurence ou de cadence de son mouvement et mesure de son orientation par rapport au Nord magnétique.

Par exemple, le système selon l'invention peut être inséré dans le talon d'une chaussure de sport pour fournir le cap et la cadence de la marche (ou de la course).

Le système selon l'invention peut communiquer ses informations (mesures brutes ou prétraitées) à une unité d'affichage, par lien radio ou autre.

L'invention concerne également un dispositif de reconstruction ou de projection, en deux dimensions, de la trajectoire d'un être vivant ou d'un objet se déplaçant, par un mouvement répétitif, dans un plan ou une surface à deux dimensions, ou le long d'un plan ou d'une surface à deux dimensions. Ce dispositif comporte :

- un magnétomètre, biaxe ou triaxe, pour mesurer au moins deux composantes, dont au moins une, et éventuellement les deux, est ou sont variable(s), de la projection du champ magnétique terrestre sur au moins deux axes du magnétomètre lié à, ou situé sur, l'être ou l'objet,
- des moyens pour détecter des occurrences du mouvement répétitif à partir de la mesure d'au moins une desdites composantes, variable, le long de l'un des axes dudit magnétomètre ou des moyens pour mesurer la période, ou la fréquence, d'un signal correspondant à au moins une desdites composantes variables le long de l'un des axes dudit magnétomètre,
- des moyens pour mesurer le cap, ou la direction, du mouvement, à partir d'au moins deux mesures de champ le long d'au moins deux axes dudit magnétomètre,
- des moyens pour reconstituer ladite trajectoire à partir, d'une part, des données de période ou de fréquence, d'autre part des données de cap ou de direction ou à partir des occurrences détectées et des mesures de cap ou de direction.

L'invention présente plusieurs avantages :

- Le système de mesure selon l'invention est simple et peu gourmand en énergie, car il utilise un magnétomètre (pas d'autres types de capteurs, tels qu'un accéléromètre ou un GPS), par exemple biaxe.
- Le système de mesure de la cadence selon l'invention ne nécessite aucune calibration au préalable.
- Ce système est facile à mettre en oeuvre car il exploite le champ magnétique ambiant et il ne requiert donc pas de source magnétique artificielle ; en outre, il peut être connecté à un émetteur radio miniaturisé, et il peut rester compact et équiper tout type d'objet.

Un dispositif selon l'invention peut comporter en outre des moyens de communication, par exemple de type radio, des données du magnétomètre à une unité de traitement et/ou d'affichage.

Il peut comporter des moyens de traitement des données de magnétométrie.

Un exemple d'application de l'invention est une chaussure, comportant un dispositif tel que décrit ci-dessus.

L'invention concerne également un système de repérage et/ou de positionnement, comportant :

-   un dispositif, selon l'invention, tel que décrit ci-dessus, de reconstruction ou de projection, en deux dimensions, de la trajectoire d'un être vivant ou d'un objet se déplaçant, par un mouvement répétitif, dans un plan ou une surface à deux dimensions ou le long d'un plan ou d'une surface à deux dimensions,
-   un dispositif de positionnement, par satellite ou par référence à des stations terrestres fixes,
-   le système étant être programmé pour que, lors d'une défaillance de fonctionnement du dispositif de positionnement par satellite ou par référence à des stations terrestres fixes, le dispositif de mesure selon l'invention soit maintenu en fonctionnement ou mis en fonctionnement.

**BRÈVE DESCRIPTION DES DESSINS**

-   La Figure 1 illustre l'utilisation d'un dispositif selon l'invention lors d'essais sur une chaussure.
-   La Figure 2 illustre une unité de calcul et d'affichage lors de la mise en oeuvre d'un dispositif selon l'invention.
-   La Figure 3 illustre l'allure des trois composantes du champ magnétique pendant une marche.
-   La Figure 4 illustre l'estimation de la cadence de marche sur plusieurs pas d'un marcheur, par autocorrélation d'un signal magnétique.
-   Les Figures 5A et 5B représentent deux trajectoires reconstruites à partir de mesures effectuées selon l'invention.

**EXPOSÉ DÉTAILLÉ DE MODES DE RÉALISATION PARTICULIERS**

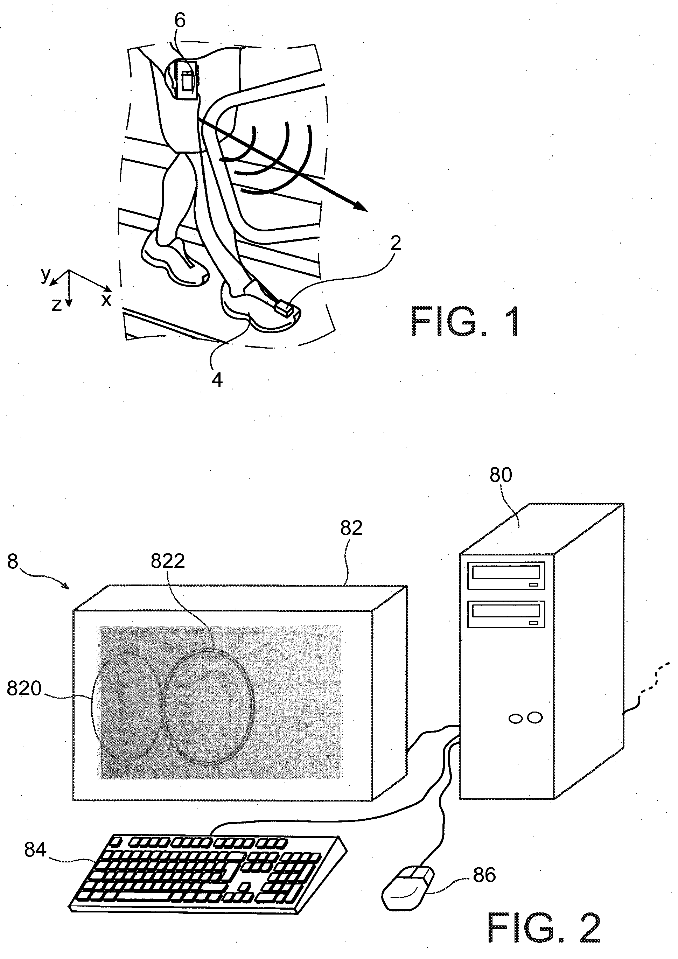

L'invention va d'abord être décrite dans le cadre d'une application à une chaussure, en liaison avec la figure 1, ici la chaussure d'une personne pratiquant un exercice sur une machine du type de celles utilisées dans les salles de sport.

En première approximation, un capteur magnétique 2 (de type fluxgate ou GMR par exemple) mesure la projection du champ magnétique terrestre sur son axe sensible. Etant fixé à l'objet 4, lui-même lié au marcheur, le capteur suit le mouvement périodique de cet objet. Des moyens 6 permettent d'acquérir les données du capteur et, éventuellement, de les transmettre, par exemple par liaison sans fil, à des moyens 8 de traitement et de mémorisation.

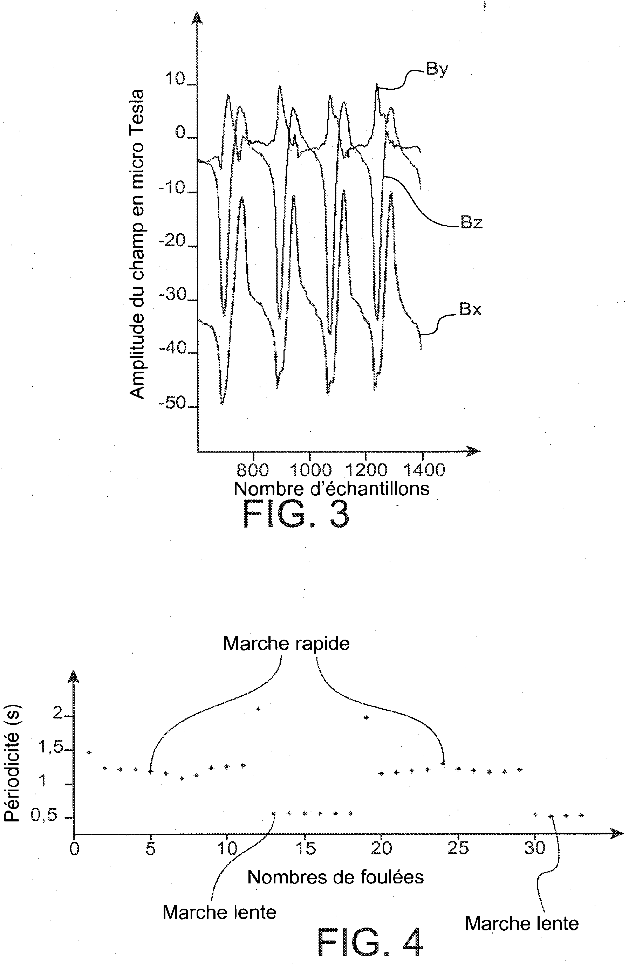

De tels moyens 8 de traitement sont représentés sur la figure 2. Ils comportent une unité centrale 80, qui va permettre de réaliser des calculs sur les données reçues, et de mémoriser lesdites données ainsi que les calculs effectués. Une unité d'affichage 82 permet d'afficher des données telles que les données reçues, par exemple sous forme de graphiques tels que celui de la figure 3, ou des données calculées, telles que celles affichées en exemple sur la figure 2, par exemple les colonnes de 820 et 822. Les données contenues dans ces deux colonnes correspondent respectivement, dans le cadre d'une application à une chaussure, à des données d'orientation et à des données de cadence de la marche ou du déplacement d'un utilisateur.

Le traitement des données peut aussi être effectué par une unité de calcul portable type processeur, ou DSP, etc....

En variante, une partie au moins du ou des traitements peut être réalisée par des moyens 6 portés par l'utilisateur de la figure 1. Dans ce cas, l'unité 80 est soulagée d'une partie au moins des traitements.

Comme on le verra par la suite, un procédé et un dispositif selon l'invention permettent en outre, de manière générale, de mesurer le cap ou la direction de déplacement d'un objet ou d'un marcheur ou d'un animal. De manière générale, un dispositif selon l'invention peut donc comporter des moyens, électroniques ou informatiques, mettant en oeuvre un traitement des données permettant d'obtenir à la fois le cap, ou les données d'orientation, et les données de cadence et éventuellement la vitesse et/ou la distance parcourue. Un tel dispositif peut en outre être muni de moyens de visualisation, par exemple pour aider un marcheur à trouver son chemin dans un lieu particulier vers un point précis. Il peut être combiné avec des moyens logiciels de cartographie.

Le champ, mesuré par les moyens 2, présente un motif périodique (ou pseudo-périodique, à cadence lentement variable) ou au moins une composante variable. Ce motif ou cette composante variable correspond aux variations de la projection du champ terrestre vu par le capteur en mouvement (voir figure 3). Il peut être entaché d'un niveau de bruit dépendant des parasités électromagnétiques environnants.

On peut extraire de cette mesure la cadence du mouvement et l'orientation du capteur. D'autres données, par exemple des données de distance parcourue, peuvent être calculées ou estimées à partir de ces données de cadence et/ou d'orientation.

Une technique d'analyse fréquentielle utilisée peut être mise en oeuvre par les moyens 80 (figure 2) de réception et de traitement des données reçues après transmission par les moyens 6, ou même éventuellement par ces derniers eux mêmes.

Un dispositif et un procédé selon l'invention ne met en oeuvre aucun dispositif supplémentaire, tel qu'un podomètre ou un capteur de type accéléromètre. Le podomètre réalisé avec un accéléromètre mesure un nombre de pas en comptant des impulsions, par exemple détectés par seuillage. Il est en principe difficile d'appliquer ce principe à un magnétomètre car ses signaux varient en amplitude avec le cap.

On peut donc utiliser des techniques qui s'affranchissent de cette variabilité, par exemple des techniques d'analyses fréquentielles, qui permettent de déterminer une cadence à partir d'un signal périodique (traitement par FFT tel que décrit par exemple dans US 5 583 776, ou par filtre adapté, ou par ondelettes par exemple).

Le signal peut être comparé en continu à un modèle : ce modèle est soit, par exemple, formulé mathématiquement, soit constitué du signal lui-même à un instant précédent.

Un exemple d'application de l'invention à la marche avec un traitement à base d'autocorrélations sur fenêtre glissante fournit les résultats illustrés en figure 4. Le principe de ce traitement est basé sur la propriété suivante de l'autocorrélation d'un signal périodique : l'autocorrélation présente des maxima à la même cadence que le signal quelle que soit l'allure du motif périodique du signal.

Pour déterminer la période on mesure l'instant non nul correspondant au premier maximum de la fonction de corrélation. Plus précisément, on sélectionne une longueur de signal L contenant au moins 4 périodes, puis on calcule son autocorrélation ; on repère par fenêtrage et seuillage le temps correspondant au premier maximum : ceci fournit une première estimation de la cadence. Cette estimation est ensuite utilisée pour déterminer une nouvelle longueur L', calculée de façon à ce que L' soit supérieure à 4 fois la cadence. Le procédé de calcul décrit ci-dessus est ensuite appliqué. Ce procédé d'estimation de la cadence est donc bouclé: on utilise la dernière estimation de la période pour déterminer la longueur du signal utile au calcul de la suivante. Cette technique permet de s'affranchir de l'allure de la marche.

En figure 4 apparaît la périodicité du mouvement en fonction du nombre de foulées, c'est-à-dire en fonction de l'écoulement du temps. On identifie bien des rythmes de marche rapide, alternés avec des rythmes de marche lente.

Là encore, un traitement d'autocorrélation peut être mis en oeuvre par des moyens tels que les moyens 80 illustrés sur la figure 2 ou par les moyens portables 6 (figure 1). L'autocorrélation n'utilise pas de modèle mathématique de la forme du signal. Si la fenêtre d'observation est assez longue, le caractère périodique du signal domine les variations d'allure liées au cap et l'autocorrélation fournit une bonne estimation de la cadence, indépendamment du cap.

Utilisée sur une fenêtre d'observation assez longue, l'invention permet de s'affranchir des variations d'allure du signal liées au cap.

Quant à l'orientation du capteur, il s'agit de l'angle entre la composante horizontale du champ magnétique et le Nord géographique. Cet angle peut être déterminé à partir des trois mesures de champ d'un capteur triaxe, ou des deux mesures de champ d'un capteur biaxe, par exemple par seuillage. Dans le cas d'un marcheur, ce capteur est de préférence placé parallèlement au pied. Il permet de repérer (par exemple par seuillage) la plage temporelle correspondant à la position horizontale du pied. Par exemple, par seuillage des signaux Bx et By de la figure 3, cette plage correspond à la zone de pente la plus douce des deux signaux.

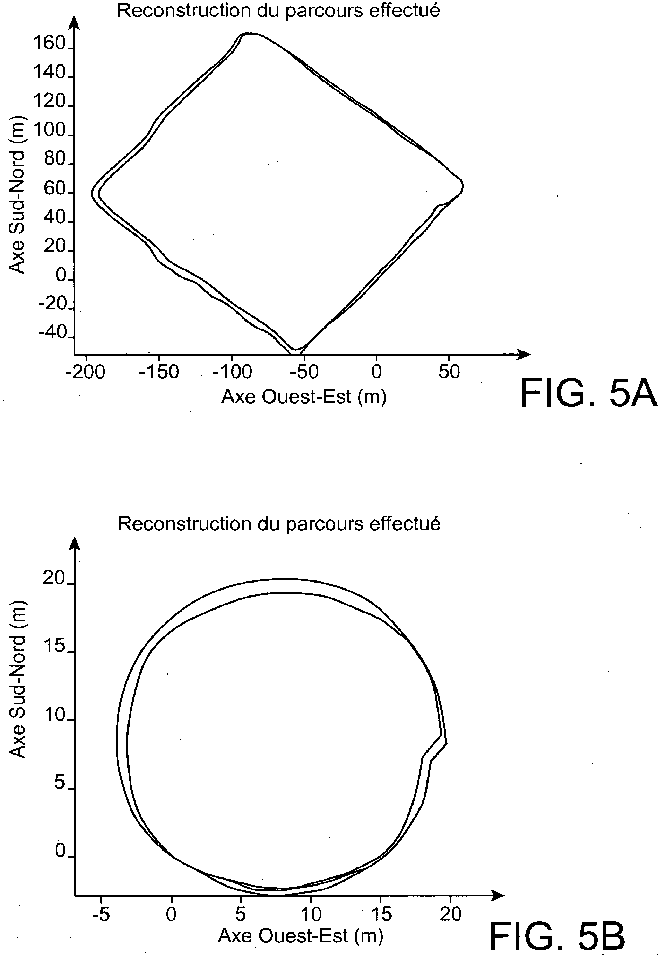

Une fusion des données, d'une part de cap ou d'orientation et, d'autre part, de cadence ou de rythme, peut être réalisée. A partir des informations de cadence ou de rythme (nombre d'occurrences du mouvement pour parcourir une distance donnée), il est possible de déterminer la distance associée à une seule occurrence du mouvement. Les informations de distance et de cap sont alors combinées pour estimer, par exemple à chaque instant, et par rapport à chacune des deux directions choisies en 2D, la distance parcourue dans la direction courante. Ainsi, sont représentées sur les figures 5A et 5B les résultats obtenus pour deux types de parcours, un premier parcours (figure 5A) rectangulaire et répété deux fois, un deuxième parcours (figure 5B) circulaire et, lui aussi, répété deux fois. Sur chacune de ces figures, une trajectoire reconstruite est donnée dans un référentiel dont l'axe des absisses est la direction Ouest - Est, et l'axe des ordonnées la direction Sur - Nord.

Plus généralement, l'invention permet de fournir une représentation visuelle du trajet d'un objet, trajet dont les composantes sont repérées le long de deux directions du plan ou de la surface dans, ou sur, lequel ou laquelle, l'objet se déplace.

Le système de base décrit dans l'invention peut être enrichi afin de fournir des fonctions complémentaires, qui peuvent, elles aussi, être mises en oeuvre par les moyens 80 ou par les moyens portables 6 de la figure 2.

Par exemple, une fonction « compteur » peut être réalisée: la détermination de la cadence T permet de compter le nombre d'occurrence du mouvement périodique N. Dans le cas de la marche, on dénombre un pas par période.

Une fonction « podomètre » peut être réalisée à partir de la connaissance du nombre d'occurrences du mouvement N qui permet, après calibration par l'utilisateur, de déterminer une caractéristique particulière du mouvement. Par exemple pour la course, on fournit la distance parcourue D à partir d'une longueur de foulée calibrée L :

$$D = N * L.$$

La longueur de la foulée L est un paramètre entré par l'utilisateur ou calculé lors d'une phase de calibration de l'appareil (marche régulière pratiquée sur une distance prédéterminée et connue).

Si la longueur de foulée est mal estimée après calibration, une erreur est introduite sur la sdistance à chaque pas. On peut alors avoir à gérer une dérive qui se traduit par un biais grandissant dans le temps entre la position réelle et la position estimée par le procédé selon l'invention. Une manière d'améliorer le dispositif est de le recaler ou le repositionner régulièrement à l'aide de données telles que :

- des données de positionnement, par exemple par GPS, lorsqu'un tel dispositif de positionnement est opérationnel,
- des données fournies par une base de données géoréférencées des lieux et qui peut fournir des informations au dispositif selon l'invention. Par exemple, lorsqu'on effectue un déplacement dans un bâtiment et que la trajectoire estimée s'effectue dans ce lieu, on peut recaler le passage de la personne au milieu d'une porte plutôt qu'à travers un mur.

Si plusieurs axes de mesure sont utilisés, et qu'une source magnétique (dipolaire ou non) est ajoutée à proximité de l'objet mobile, alors une estimation de la trajectoire de l'objet (position et/ou altitude) par rapport à la position de cette source (ou inversement) peut également être réalisée grâce aux techniques connues d'inversion de mesure magnétique (optimisation, filtre de Kalman, par exemple décrites dans C.P.Frahm « Inversion of the magnetic field gradient equations for a magnetic dipole field » NCSL Informal report 135-72, 1972). En plaçant, par exemple, un capteur magnétique (un gradient-mètre magnétique, qui permet de mettre en oeuvre la technique de mesure décrite dans le document ci-dessus) sur un pied et un aimant sur l'autre, on peut, par ces techniques d'inversion, estimer la trajectoire d'un pied par rapport à l'autre et déterminer ainsi en temps réel la longueur de la foulée. Cette approche est plus précise que la calibration de la longueur du pas évoquée précédemment.

Un procédé et un dispositif selon l'invention, tels que décrits ci-dessus, mettent en oeuvre une mesure de la période ou de la fréquence du mouvement, après mesure d'une composante variable du champ magnétique.

Plus simplement, à partir des mêmes données de champ magnétique que ci-dessus, il est possible d'appliquer un seuillage (simple, ou à hystérésis pour être plus robuste) sur le signal résultant de la mesure de la composante variable du champ magnétique. On obtient alors l'identification de chaque occurrence du mouvement périodique ou pseudopériodique ou de chaque phase élémentaire de ce mouvement, dès lors que le signal dépasse une certaine valeur de seuil. On peut ainsi compter le nombre de mouvements élémentaires. Connaissant la valeur de la distance associée à un mouvement élémentaire, on en déduit la distance totale parcourue. Le signal peut être pré-conditionné pour s'affranchir (au moins partiellement) de sa variabilité, par exemple en normalisant le signal sur une fenêtre glissante (on force le minimum du signal dans cette fenêtre à 0 et le maximum à 1). Un tel traitement n'est pas forcément très robuste mais donne des résultats corrects. Par ailleurs, dans ce mode de réalisation, la mesure de cap est identique à celle déjà décrite antérieurement. On peut donc là encore reconstituer une trajectoire, comme sur les figures 5A et 5B par exemple. Les informations de distance et de cap sont alors combinées pour estimer, par exemple à chaque instant, et par rapport à chacune des deux directions choisies en 2D, la distance parcourue dans la direction courante. Là encore, l'invention permet de fournir une représentation visuelle du trajet d'un objet, trajet dont les composantes sont repérées le long de deux directions du plan ou de la surface dans, ou sur, lequel ou laquelle, l'objet se déplace.

Quel que soit le mode de réalisation, un dispositif portable selon l'invention peut être porté sur une personne ou un animal ou même un robot marcheur. Il est alors solidaire de la personne ou de l'animal ou du robot. Il permet de reconstruire la trajectoire, au sol, du porteur et éventuellement d'afficher cette trajectoire sur un écran de visualisation, par exemple sous la forme des graphiques des figures 5A et 5B. Le principe de mesure fonctionne d'autant mieux que le porteur effectue un avancement « frotté » (régulier) et non « glissé » sur le sol. La marche, la course à pied, le trot, le galop sont des mouvements qui peuvent être traités par un procédé et un dispositif selon l'invention.

Un dispositif selon l'invention peut être associé à un dispositif de repérage ou de positionnement, par exemple de type GPS. En variante il peut s'agir d'un dispositif de repérage par référence à des stations terrestres fixes, de type radio-positionnement UWB ou radiolocalisation UWB. Lorsque ce dernier n'est pas opérationnel, du fait de conditions telles qu'une perte des satellites, ou en cas de situation à l'intérieur de bâtiments, ou dans une forêt, ou dans une rue encaissée entre de grands immeubles, un dispositif selon l'invention permet de fournir à un utilisateur des informations, d'une part de cap ou de direction et, d'autre part, de cadence ou de rythme ou de vitesse. L'ensemble du système peut être programmé pour que, lors d'une défaillance de fonctionnement du dispositif de repérage ou de positionnement, le dispositif selon l'invention soit maintenu en fonctionnement ou mis en fonctionnement.

Un dispositif selon l'invention, par exemple couplé à un système de positionnement comme expliqué ci-dessus, peut être associé également à un logiciel de cartographie.

Un tel dispositif peut être utile pour aider un marcheur à trouver son chemin dans un lieu particulier, vers un point précis.

Un exemple d'utilisation est le suivant.

Un utilisateur dispose d'un système comportant un dispositif selon l'invention et un dispositif de repérage de type GPS.

Cet utilisateur a son téléphone sans fil équipé avec un moyen de transmission de données sans contact (de type bluetooth par exemple).

Il s'approche, à l'entrée d'un grand centre commercial couvert, de la borne d'information pour l'accès à la galerie marchande et au plan de cette galerie.

Automatiquement, le plan est transféré dans un format vectoriel (format svg par exemple) sur le téléphone sans fil de l'utilisateur, qui voit ce plan s'afficher sur son écran, avec un point rouge (qui signifie « vous êtes ici ! »), positionné là où se trouve la borne.

Les moyens de positionnement de type GPS sont inopérants, car les satellites ne sont pas visibles dans le magasin.

Le mobile (ne voyant pas les satellites) bascule automatiquement en mode de positionnement « relatif » à l'aide du magnétomètre.

La personne souhaite se rendre à l'autre bout de la galerie, à une destination souhaitée, chez un marchand de chaussures par exemple. Elle pointe l'endroit sur la carte. L'application connaît alors le cap global, par rapport au Nord, qu'il faut emprunter. Le marcheur peut aligner sa position et l'objectif avec sa direction réelle.

Il n'a plus qu'à avancer pour faire se déplacer le point qui le localise à chaque instant jusqu'à ce qu'il arrive à la destination voulue.

L'invention a été décrite dans le cadre du déplacement d'un marcheur mais elle s'applique aussi au déplacement d'un animal. Le déplacement d'un être vivant, humain ou animal, se fait sensiblement sur ou dans un plan horizontal ou sur un espace à deux dimensions. Elle s'applique aussi à la caractérisation du déplacement d'un objet, dans un plan ou une surface ou le long d'un plan ou d'une surface.

De manière générale, et sans être limité à l'exemple précédent, dans un procédé selon l'invention, la mesure de la projection du champ magnétique terrestre peut être faite en continu. Le procédé peut alors comporter par exemple un traitement des mesures de projection du champ magnétique terrestre, ce traitement des mesures comportant une étape de comparaison du signal mesuré à un modèle mathématique ou au signal mesuré à un instant précédent. La comparaison peut être réalisée par exemple par autocorrélation, ou par FFT, ou par filtre adapté, ou par ondelettes.

**Revendications**

1. Procédé de reconstruction, en deux dimensions, de la trajectoire d'un être vivant ou d'un objet se déplaçant, par un mouvement répétitif, dans un plan ou une surface à deux dimensions ou le long d'un plan ou d'une surface à deux dimensions, comportant :

   - mesurer au moins deux composantes de la projection du champ magnétique terrestre sur au moins deux axes d'un magnétomètre biaxe ou triaxe lié à, ou situé sur, l'être vivant ou l'objet,
   - détecter des occurrences du mouvement répétitif à partir de la mesure d'au moins une desdites composantes, variable, le long de l'un des axes dudit magnétomètre,
   - mesurer le cap, ou la direction, du mouvement, à partir d'au moins deux mesures de champ le long d'au moins deux axes dudit magnétomètre,
   - reconstituer ladite trajectoire à partir des occurrences détectées et des mesures de cap ou de direction.

2. Procédé selon la revendication 1, la trajectoire étant reconstruite à partir des occurrences détectées, de la distance parcourue par occurrence, et des mesures de cap ou de direction.

3. Procédé selon la revendication 1, comportant une détection de la période, ou de la fréquence, du signal correspondant à la mesure de ladite composante variable.

4. Procédé selon la revendication 3, la détermination du nombre d'occurrence du mouvement répétitif étant réalisé à partir de la période (T).

5. Procédé selon l'une des revendications 1 à 4, la mesure de la projection du champ magnétique terrestre étant faite en continu.

6. Procédé selon l'une des revendications 1 à 5, dans lequel on met en oeuvre un procédé bouclé d'estimation, en utilisant la dernière estimation de la période pour déterminer la longueur du signal utile au calcul de la suivante.

7. Procédé selon l'une des revendications 1 à 6, dans lequel une source magnétique est disposée à proximité de l'être ou de l'objet mobile, le procédé comportant en outre une estimation de la trajectoire relative, en position et/ou en attitude, par rapport à cette source.

8. Procédé selon la revendication 7, l'estimation de la trajectoire relative mettant en oeuvre une inversion de mesure magnétique par optimisation, ou filtre de Kalman.

9. Procédé selon l'une des revendications 1 à 8, dans lequel on recale ou on repositionne le dispositif à l'aide de données de positionnement.

10. Dispositif de reconstruction, en deux dimensions, de la trajectoire d'un être vivant ou d'un objet se déplaçant, par un mouvement répétitif, dans un plan ou une surface à deux dimensions ou le long d'un plan ou d'une surface à deux dimensions, **caractérisé en ce qu'**il comporte :

- un magnétomètre (2), biaxe ou triaxe, pour mesurer au moins deux composantes de la projection du champ magnétique terrestre sur au moins deux axes du magnétomètre lié à, ou situé sur, l'être ou l'objet,
- des moyens pour détecter des occurrences du mouvement répétitif à partir de la mesure d'au moins une desdites composantes, variable, le long de l'un des axes dudit magnétomètre,
- des moyens pour mesurer le cap, ou la direction, du mouvement, à partir d'au moins deux mesures de champ le long d'au moins deux axes dudit magnétomètre,
- des moyens pour reconstituer ladite trajectoire à partir des occurrences détectées et des mesures de cap ou de direction.

11. Dispositif selon la revendication 10, les moyens pour détecter des occurrences du mouvement répétitif comportant des moyens pour mesurer la période, ou la fréquence, d'un signal correspondant à ladite composante variable.

12. Dispositif selon la revendication 10 ou 11, comportant en outre des moyens (6) de communication - par exemple des moyens (6) de communication radio - des données du magnétomètre à une unité de traitement et/ou d'affichage.

13. Dispositif selon l'une des revendications 10 à 12, comportant des moyens (6) de traitement des données de magnétométrie.

14. Chaussure comportant un dispositif selon l'une des revendications 10 à 13.

15. Système de repérage et de positionnement, comportant :

- un dispositif de mesure de la période, ou de la fréquence, et du cap, ou de la direction, du mouvement répétitif d'un être vivant ou d'un objet se déplaçant dans un plan ou une surface à deux dimensions ou le long d'un plan ou d'une surface à deux dimensions, selon l'une des revendications 10 à 14,
- un dispositif de positionnement par satellite ou par référence à des stations terrestres fixes, par exemple de type radio-positionnement UWB ou radiolocalisation UWB,
- le système étant être programmé pour que, lors d'une défaillance de fonctionnement du dispositif de positionnement par satellite, le dispositif de mesure selon l'invention soit maintenu en fonctionnement ou mis en fonctionnement.

**Patentansprüche**

1. Verfahren zur Rekonstruktion, in zwei Dimensionen, der Bahnkurve eines Lebewesens oder eines Gegenstandes, das/der sich mittels einer repetitiven Bewegung in einer Ebene oder einer zweidimensionalen Fläche oder entlang einer Ebene oder einer zweidimensionalen Fläche bewegt, umfassend:

Messen von mindestens zwei Komponenten der Projektion des terrestrischen Magnetfeldes in mindestens zwei Achsen eines zweiachsigen oder dreiachsigen Magnetometers, das mit dem Lebewesen oder dem Gegenstand verbunden ist oder auf diesem angeordnet ist,
Erfassen von Vorkommensfällen der repetitiven Bewegung ausgehend von der Messung von mindestens einer der veränderlichen Komponenten entlang einer der Achsen des Magnetometers,
Messen des Kurses, oder der Richtung, der Bewegung ausgehend von mindestens zwei Messungen des Feldes entlang mindestens zwei Achsen des Magnetometers,
Rekonstruieren der Bahnkurve ausgehend von den erfassten Vorkommensfällen und den Messungen des Kurses oder der Richtung.

2. Verfahren nach Anspruch 1, wobei die Bahnkurve ausgehend von den erfassten Vorkommensfällen, der je Vorkommensfall zurückgelegten Strecke, und den Kurs- oder Richtungsmessungen rekonstruiert wird.

3. Verfahren nach Anspruch 1, umfassend eine Erfassung der Periode, oder der Frequenz, des Signals, das der Messung der veränderlichen Komponente entspricht.

4. Verfahren nach Anspruch 3, wobei die Bestimmung der Vorkommensanzahl der repetitiven Bewegung ausgehend von der Periode (T) realisiert wird.

5. Verfahren nach einem der Ansprüche 1 bis 4, wobei die Messung der Projektion des terrestrischen Magnetfeldes kontinuierlich erfolgt.

6. Verfahren nach einem der Ansprüche 1 bis 5, bei dem ein Schätzungsschleifenprozess durchgeführt wird, wobei dabei die letzte Schätzung der Periode verwendet wird, um die Länge des Nutzsignals bei der Berechnung der folgenden zu bestimmen.

7. Verfahren nach einem der Ansprüche 1 bis 6, bei dem eine Magnetquelle in der Nähe des beweglichen Lebewesens oder Gegenstandes angeordnet ist, wobei das Verfahren weiter eine Schätzung der relativen Bahnkurve, hinsichtlich Position und/oder Lage, bezüglich dieser Quelle aufweist.

**8.** Verfahren nach Anspruch 7, wobei zur Schätzung der relativen Bahnkurve eine Invertierung der magnetischen Messung mittels Optimierung, oder mittels Kalman-Filter, eingesetzt wird.

**9.** Verfahren nach einem der Ansprüche 1 bis 8, bei dem eine Neufixierung oder Neupositionierung der Vorrichtung mit Hilfe von Positionierungsdaten vorgenommen wird.

**10.** Vorrichtung zur Rekonstruktion, in zwei Dimensionen, der Bahnkurve eines Lebewesens oder eines Gegenstandes, das/der sich mittels einer repetitiven Bewegung in einer Ebene oder einer zweidimensionalen Fläche oder entlang einer Ebene oder einer zweidimensionalen Fläche bewegt, **dadurch gekennzeichnet, dass** sie aufweist:

ein zweiachsiges oder dreiachsiges Magnetometer (2) zum Messen von mindestens zwei Komponenten der Projektion des terrestrischen Magnetfeldes in mindestens zwei Achsen des Magnetometers, das mit dem Lebewesen oder dem Gegenstand verbunden ist oder auf diesem angeordnet ist,
eine Einrichtung zum Erfassen von Vorkommensfällen der repetitiven Bewegung ausgehend von der Messung von mindestens einer der veränderlichen Komponenten entlang einer der Achsen des Magnetometers,
eine Einrichtung zum Messen des Kurses, oder der Richtung, der Bewegung ausgehend von mindestens zwei Messungen des Feldes entlang mindestens zwei Achsen des Magnetometers,
eine Einrichtung zum Rekonstruieren der Bahnkurve ausgehend von den erfassten Vorkommensfällen und den Messungen des Kurses oder der Richtung.

**11.** Vorrichtung nach Anspruch 10, wobei die Einrichtung zum Erfassen der Vorkommensfälle der repetitiven Bewegung eine Einrichtung aufweist, um die Periode, oder die Frequenz, eines Signals zu messen, das der variablen Komponente entspricht.

**12.** Vorrichtung nach Anspruch 10 oder 11, die weiter eine Einrichtung (6) zur Übermittlung - beispielsweise eine Funkübermittlungseinrichtung (6) - der Daten des Magnetometers zu einer Verarbeitungs- und/oder Anzeigeeinheit aufweist.

**13.** Vorrichtung nach einem der Ansprüche 10 bis 12, die eine Einrichtung (6) zur Verarbeitung der Magnetometerdaten aufweist.

**14.** Schuh, der eine Vorrichtung nach einem der Ansprüche 10 bis 13 aufweist.

**15.** System zur Ortung und zur Positionsbestimmung, aufweisend:

eine Vorrichtung zum Messen der Periode, oder der Frequenz, und des Kurses oder der Richtung, der repetitiven Bewegung eines Lebewesens oder eines Gegenstandes, das/der sich in einer Ebene oder einer zweidimensionalen Fläche, oder entlang einer Ebene oder einer zweidimensionalen Fläche bewegt, nach einem der Ansprüche 10 bis 14,
eine Vorrichtung zur Positionsbestimmung mittels Satellit oder mittels Referenzierung stationärer terrestrischer Stationen, beispielsweise vom Typ einer Funkpositionsbestimmung (UWB) oder Funklokalisierung (UWB),
wobei das System programmiert ist, um, bei einem Versagen des Betriebs der Vorrichtung zur Positionsbestimmung mittels Satellit, die erfindungsgemäße Messungsvorrichtung in Betrieb gehalten wird oder in Betrieb versetzt wird.

**Claims**

**1.** Method of reconstructing, in two dimensions, the path of a living being or an object moving, by a repetitive movement, in a plane or a two-dimensional surface or along a plane or a two-dimensional surface, comprising:

- measuring at least two components of the projection of the terrestrial magnetic field on at least two axes of a biaxial or triaxial magnetometer connected to or situated on the living being or object,
- detecting occurrences of the repetitive movement from the measurement of at least one of said components, variable, along one of the axes of said magnetometer,
- measuring the heading, or direction, of the movement, from at least two field measurements along at least two axes of said magnetometer,
- reconstituting said path from the occurrences detected and the heading or direction measurements.

**2.** Method according to claim 1, the path being reconstructed from the occurrences detected, the distance travelled per occurrence, and heading or direction measurements.

**3.** Method according to claim 1, comprising a detection of the period, or of the frequency, of the signal corresponding to the measurement of said variable component.

4. Method according to claim 3, the number of occurrences of the repetitive movement being determined from the period (T).

5. Method according to one of claims 1 to 4, the measurement of the projection of the terrestrial magnetic field being made continuously.

6. Method according to one of claims 1 to 5, in which a looped estimation method is used, using the last estimation of the period for determining the length of the signal useful for calculation of the following one.

7. Method according to one of claims 1 to 6, in which a magnetic source is disposed close to the being or movable object, the method also comprising an estimation of the relative path, in terms of position and/or attitude, with respect to this source.

8. Method according to claim 7, the estimation of the relative path using a magnetic measurement inversion by optimisation, or Kalman filter.

9. Method according to one of claims 1 to 8, in which the device is reset or repositioned by means of positioning data.

10. Device for reconstructing, in two dimensions, the path of a living being or an object moving, by a repetitive movement, in a plane or a two-dimensional surface or along a plane or a two-dimensional surface, **characterised in that** it comprises:

    - a biaxial or triaxial magnetometer (2) for measuring at least two components of the projection of the terrestrial magnetic field on at least two axes of the magnetometer connected to or situated on the being or object,
    - means for detecting occurrences of the repetitive movement from the measurement of at least one of the said components, variable, along one of the axes of said magnetometer.
    - means for measuring the heading, or direction, of the movement, from at least two field measurements along at least two axes of said magnetometer,
    - means for reconstituting said path from the occurrences detected and the heading or direction measurements.

11. Device according to claim 10, the means for detecting occurrences of the repetitive movement comprising means for measuring the period, or frequency, of a signal corresponding to said variable component.

12. Device according to claim 10 or 11, also comprising means (6) - for example means (6) for radio communication - of communicating data from the magnetometer to a processing and/or display unit.

13. Device according to one of claims 10 to 12, comprising means (6) of processing the magnetometry data.

14. Shoe comprising a device according to one of claims 10 to 13.

15. Locating and positioning system, comprising:

    - a device for measuring the period, or frequency, and the heading, or direction, of the repetitive movement of a living being or object moving in a plane or a two-dimensional surface or along a plane or a two-dimensional surface, according to one of claims 10 to 14,
    - a device for positioning by satellite or with reference to fixed terrestrial stations, for example of the UWB radio-positioning or UWB radio-location type,
    - the system being programmed so that, when there is an operating failure of the satellite positioning device, the measuring device according to the invention is kept in operation or set in operation.

FIG. 1

FIG. 2

FIG. 3

FIG. 4

Reconstruction du parcours effectué

FIG. 5A

Reconstruction du parcours effectué

FIG. 5B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5583776 A
- US 6132391 A
- WO 2005034751 A
- WO 2005091113 A